Europäisches Patentamt

**European Patent Office**

**Office européen des brevets**

(19)

(11) **EP 0 981 770 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.$^7$: **G02B 6/00**

(21) Anmeldenummer: **98934771.1**

(86) Internationale Anmeldenummer:
**PCT/DE98/01405**

(22) Anmeldetag: **15.05.1998**

(87) Internationale Veröffentlichungsnummer:
**WO 98/057202 (17.12.1998 Gazette 1998/50)**

(54) **VORRICHTUNG ZUM ÜBERLAGERN OPTISCHER SIGNALE MIT UNTERSCHIEDLICHEN WELLENLÄNGEN**

DEVICE FOR SUPERPOSING OPTICAL SIGNALS WITH DIFFERENT WAVELENGTHS

DISPOSITIF POUR SUPERPOSER DES SIGNAUX OPTIQUES A LONGUEURS D'ONDES DIFFERENTES

(84) Benannte Vertragsstaaten:
**BE DE ES FR GB IT NL SE**

(30) Priorität: **17.05.1997 DE 19720852**

(43) Veröffentlichungstag der Anmeldung:
**01.03.2000 Patentblatt 2000/09**

(73) Patentinhaber: **Heinrich-Hertz-Institut für Nachrichtentechnik Berlin GmbH**
**10587 Berlin (DE)**

(72) Erfinder:
• **KUHLOW, Berndt**
  **D-13467 Berlin (DE)**
• **PRZYREMBEL, Georges**
  **D-14197 Berlin (DE)**

(74) Vertreter: **Rudolph, Margit et al**
**Heinrich-Hertz-Institut für Nachrichtentechnik Berlin GmbH,**
**Gemeinsamer Patentservice,**
**Hausvogteiplatz 5-7**
**10117 Berlin (DE)**

(56) Entgegenhaltungen:
**EP-A- 0 444 817        EP-A- 0 528 652**
**US-A- 5 440 416**

EP 0 981 770 B1

## Beschreibung

Die Erfindung betrifft eine Vorrichtung zum Überlagern optischer Signale mit unterschiedlichen Wellenlängen mit einem Eingangsfreistrahlkoppler und einem Ausgangsfreistrahlkoppler, deren Freistrahlbereiche über Phasenschiebelichtleiter eines Lichtleitergitters miteinander verbunden sind, mit einer ersten Eingangslichtleitereinheit, die an den Eingangsfreistrahlkoppler angeschlossen ist, mit wenigstens einer weiteren Eingangslichtleitereinheit, wobei in jeder Eingangslichtleitereinheit wenigstens eine Wellenlänge führbar ist, und mit einer eine Anzahl von Ausgangslichtleitern aufweisenden Ausgangslichtleitereinheit, wobei die Ausgangslichtleiter an den Ausgangsfreistrahlkoppler angeschlossen und so angeordnet sind, daß die Ausgangslichtleiter jeweils von wenigstens zwei optischen Signalen mit unterschiedlichen Wellenlängen beaufschlagbar sind.

Eine derartige Vorrichtung ist aus der US-A-5,440,416 bekannt. Bei der gattungsgemäßen Vorrichtung sind ein Eingangsfreistrahlkoppler und ein Ausgangsfreistrahlkoppler vorgesehen, deren Freistranlbereiche über ein Lichtleitergitter miteinander verbunden sind. Weiterhin verfügt die gattungsgemäße Vorrichtung über zwei Eingangslichtleitereinheiten, die jeweils einen Eingangslichtleiter aufweisen. In dem Eingangslichtleiter einer Einganslichtleitereinheit sind optische Signale mit unterschiedlichen Wellenlängen einspeisbar. Dieser Eingangslichtleiter ist an den Eingangsfreistrahlkoppler angeschlossen. Der Eingangslichtleiter der weiteren Eingangslichtleitereinheit ist an die mit dem Lichtleitergitter verbundene Seite des Ausgangsfreistrahlkopplers angeschlossen. Weiterhin sind an den Ausgangsfreistrahlkoppler Ausgangslichtleiter einer Ausgangslichtleitereinheit angeschlossen, die so angeordnet sind, daß sie jeweils mit einem in dem an den Eingangsfreistrahlkoppler angeschlossenen Eingangslichtleiter geführten Signal und von einem Signal aus dem an den Ausgangsfreistrahlkoppler angeschlossenen Eingangslichtleiter beaufschlagbar sind.

Durch die Abbildungsfunktion des durch den Eingangsfreistrahlkoppler, das Lichtleitergitter und den Ausgangsfreistrahlkoppler gebildeten sogenannten Phased-Array-Spektrographen werden die optischen Signale mit unterschiedlichen Wellenlängen, die in dem Eingangslichtleiter der an den Eingangsfreistrahlkoppler angeschlossenen Eingangslichtleitereinheit geführt sind, jeweils zugeordneten Ausgangslichtleitern zugeführt. Das in dem Eingangslichtleiter der an den Ausgangsfreistrahlkoppler angeschlossenen Eingangslichtleitereinheit geführte optische Signal breitet sich als Kugelwelle in den Freistrahlbereich des Ausgangsfreistrahlkopplers aus und beaufschlagt die Ausgangsseite des Ausgangsfreistrahlkopplers, an der die Ausgangslichtleiter angeschlossen sind.

Mit der gattungsgemäßen Vorrichtung ist zwar die Funktion eines optischen Multiplexers durchführbar indem die in den beiden Eingangslichtleitereinheiten geführten Wellenlängen zugeordneten Ausgangslichtleitern einspeisbar sind, allerdings weist sie den Nachteil auf, daß verhältnismäßig hohe Verluste auftreten.

Aus EP 528 652 ist ebenfalls ein optischer Multiplexer bekannt, der jedoch keine weitere Eingangslichtleitereinheit aufweist. In dieser Druckschrift wird die periodische Übertragungseigenschaft, durch welche das Auftreten von aus einem Eingangswellenleiter stammenden Signalen mit der Wellenlängenperiode $\Delta\lambda$ auf einem Ausgangswellenleiter möglich ist (d.h. neben der Wellenlänge $\lambda_1$ erscheint noch die nächste periodisch mögliche $\lambda_2 = \lambda_1 + \Delta\lambda$, und noch $\lambda_3 = \lambda_1 + 2\cdot\Delta\lambda$ ... usw.), beschrieben. Diese Lösung ist eine spezielle Ausführung eines optischen Spektrographen in planerer Wellenleitertechnik.

Der Erfindung liegt die Aufgabe zugrunde, eine Vorrichtung der eingangs genannten Art zu schaffen, die sich durch niedrige Dämpfungsverluste auszeichnet.

Diese Aufgabe wird, wie in Anspruch 1 definiert, erfindungsgemäß dadurch gelöst, daß die wenigstens eine weitere Eingangslichtleitereinheit in den Freistrahlbereich des Eingangsfreistrahlkoppler mündet und daß Mündungsbereiche der Eingangslichtleitereinheiten in den Freistrahlbereich des Eingangsfreistrahlkoppler relativ zu den Ausgangslichtleitern gemäß der Gleichung

$$\Theta_{IN}^{(i)} = \frac{m}{n_s d}\left\{\lambda^{(i)} - \lambda_c\left[1 \div \frac{1}{n_c}\frac{dn_c}{d\lambda}\Big|_{\lambda=\lambda_c}\left(\lambda^{(i)} - \lambda_c\right)\right]\right\} - \Theta_{OUT}^{(i)}$$

wobei $\lambda_{(i)}$ die in einem Eingangslichtleiter der Eingangslichtleitereinheiten geführte Wellenlänge; $\lambda_c$ die Zentralwellenlänge der Vorrichtung bedeutet, m die Beugungsordnung des Lichtleitergitters: $n_c$ den effektiven Brechungsindex der Phasenschiebelichtleiter; $n_s$ den effektiven Brechungsindex der Freistrahlbereiche; d die Gitterkonstante (pitch) der Phasenschiebelichtleiter am Übergang zum Ausgangsfreistrahlbereich des Ausgangsfreistrahlkopplers; $\Theta_{IN}^{(I)}$ den Einkoppelwinkel des i-ten Einganslichtleiters relativ zur Eingangssymmetrieachse und $\Theta_{OUT}^{(i)}$ den Auskoppelwinkel relativ zur Ausgangssymmetrieachse des Ausgangsfreistrahlbereiches so angeordnet und dimensioniert sind, daß jeder Ausgangslichtleiter mit wenigstens zwei optischen Signalen unterschiedlicher Wellenlängen, die mindestens in zwei Eingangslichtleitereinheiten geführt sind, beaufschlagbar ist.

Die Zentralwellenlänge $\lambda_c$ der Vorrichtung ist aus dem Mittel zwischen der Broadcast-Wellenlänge beziehungsweise der Mittenwellenlänge der spezifischen Wellenlängen berechnet.

Dadurch, daß die Eingangslichtleitereinheiten an den Eingangsfreistrahlkoppler angeschlossen und die Mündungsbereiche der Eingangslichtleitereinheiten relativ zu den Ausgangslichtleitern so angeordnet und dimensioniert sind, daß jeder Ausgangslichtleiter mit wenigstens zwei optischen Signalen mit unterschiedlichen Wellenlängen beaufschlagbar ist, werden die optischen Signale der Eingangslichtleitereinheiten mit geringen Dämpfungsverlusten über die Abbildungsfunktion des durch den Eingangsfreistrahlkoppler, das Lichtleitergitter und den Ausgangsfreistrahlkoppler gebildeten sogenannten Phased-Array-Spektrographen gezielt den Ausgangslichtleitern zugeführt, wobei durch die Trennung der vollständig im Eingangsfreistrahlkoppler erfolgenden Leistungsaufteilung von der abbildenden gezielten Überlagerung im Ausgangsfreistrahlkoppler Optimierungsmaßnahmen an dem Eingangsfreistrahlkoppler mit den angeschlossenen Eingangslichtleitereinheiten und dem Ausgangsfreistrahlkoppler mit der angeschlossenen Ausgangslichtleitereinheit getrennt effektiv durchführbar sind.

In einer Ausgestaltung der Erfindung weist wenigstens eine erste Eingangslichtleitereinheit eine Anzahl von an den Eingangsfreistrahlkoppler angeschlossenen Eingangslichtleitern auf. In einer diesbezüglichen Weiterbildung sind in den einzelnen Eingangslichtleitern der ersten Eingangslichtleitereinheit optische Signale mit unterschiedlichen, um eine Zentralwellenlänge gruppierte Wellenlängen führbar, wobei die Eingangslichtleiter in bezug auf die Ausgangslichtleiter so angeordnet und dimensioniert sind, daß jedem Ausgangslichtleiter ein Eingangslichtleiter der ersten Eingangslichtleitereinheit zugeordnet ist.

In einer Weiterbildung ist eine zweite Eingangslichtleitereinheit vorgesehen, die mit einem optischen Signal einer Wellenlänge beaufschlagbare einzelne Eingangslichtleiter aufweist, die in bezug auf die Ausgangslichtleiter so angeordnet und dimensioniert sind, daß jeder Ausgangslichtleiter einem Eingangslichtleiter der zweiten Eingangslichtleitereinheit zugeordnet ist.

Bei einer vorteilhaften Ausgestaltung sind zwei gemäß den vorangegangenen Ausführungsbeispielen mit Eingangslichtleitern ausgestaltete Eingangslichtleiter vorgesehen, so daß jedem Ausgangslichtleiter genau ein Eingangslichtleiter der ersten Eingangslichtleitereinheit und ein Eingangslichtleiter der zweiten Eingangslichtleitereinheit zugeordnet ist. Dadurch ist eine besonders geringe Systemdämpfung bei einer kontrollierten Multiplexfunktion erzielt.

Bei weiteren Ausführungsbeispielen verfügt wenigstens eine Eingangslichtleitereinheit über einen Eingangslichtleiter, der sich vorzugsweise hyperbolisch in Richtung des Eingangsfreistrahlkopplers aufweitet. In diesem einzelnen sich aufweitenden Eingangslichtleiter ist ein optisches Signal einer Wellenlänge einspeisbar, das auf die Ausgangslichtleiter zu verteilen ist. Dieser Aufbau führt zwar zu etwas höheren Dämpfungsverlusten, gestattet aber das Einkoppeln von sogenannten Broadcast-Wellenlängen, die verhältnismäßig stark schwanken, da durch die Aufweitung des Eingangslichtleiters sichergestellt ist, daß auch bei schwankenden Wellenlängen die Ausgangslichtleiter mit dem betreffenden optischen Signal beaufschlagt sind.

Weitere zweckmäßige Ausgestaltungen und Vorteile der Erfindung sind Gegenstand der Unteransprüche sowie der nachfolgenden Beschreibung von speziellen Ausführungsbeispielen unter Bezug auf die Figuren der Zeichnung. Es zeigen:

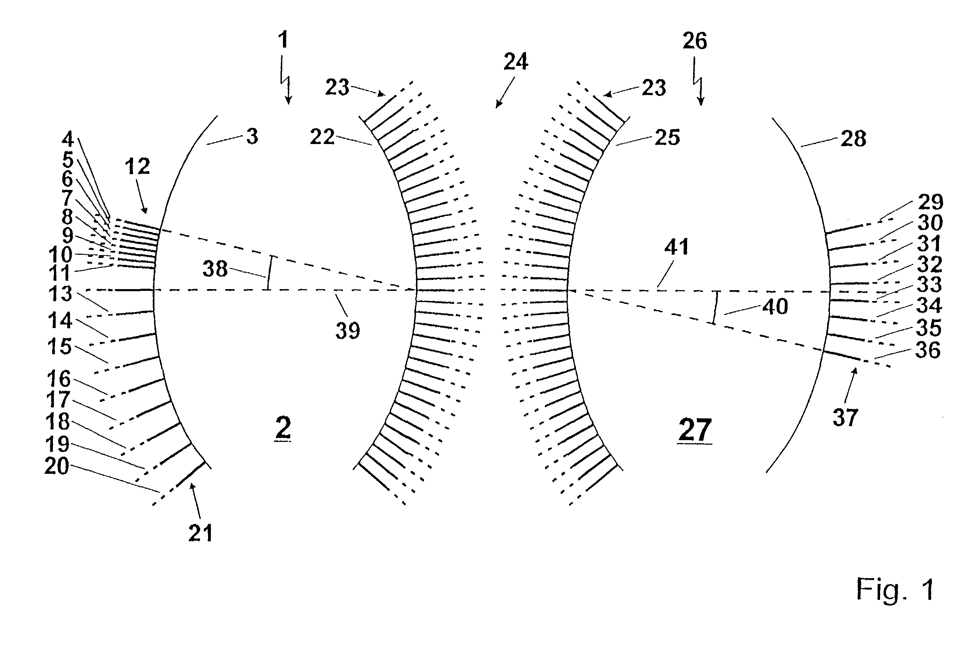

Fig. 1    ein Ausführungsbeispiel einer Vorrichtung zum Überlagern optischer Signale mit unterschiedlichen Wellenlängen mit zwei Eingangslichtleiter aufweisenden Eingangslichtleitereinheiten und

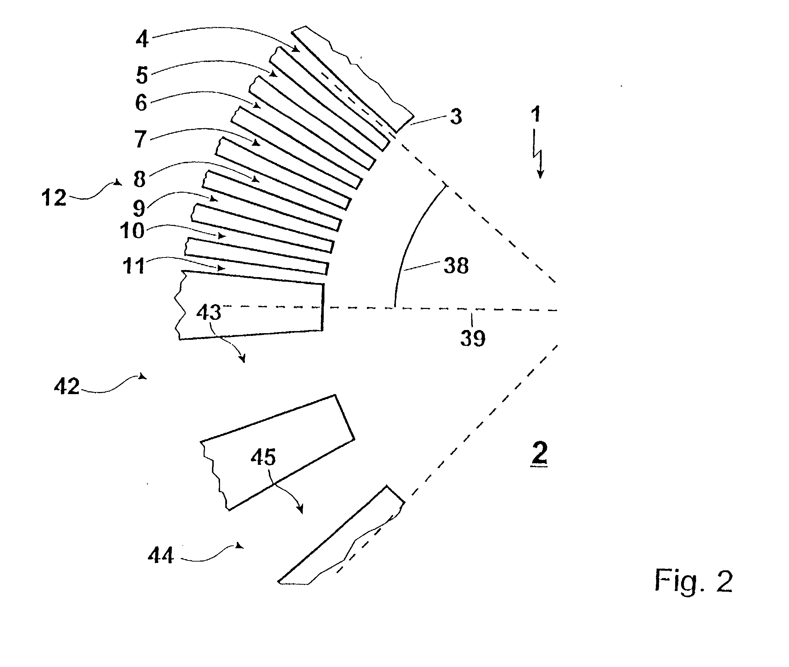

Fig. 2    in einer gegenüber Fig. 1 vergrößerten Darstellung ein weiteres Ausführungsbeispiel einer Vorrichtung zum Überlagern optischer Signale mit unterschiedlichen Wellenlängen, bei dem eine Eingangslichtleitereinheit mehrere Eingangslichtleiter aufweist und zwei weitere Eingangslichtleitereinheiten durch jeweils einen sich in Richtung des Mündungsbereiches in einen Freistrahlbereich eines Eingangsfreistrahlkopplers erweiterten Eingangslichtleiter gebildet sind.

Fig. 1 zeigt ein Ausführungsbeispiel einer Vorrichtung zum Überlagern optischer Signale mit unterschiedlichen Wellenlängen, die einen Eingangsfreistrahlkoppler 1 aufweist. An einer einen Eingangsfreistrahlbereich 2 des Eingangsfreistrahlkopplers 1 begrenzenden, konvex kreisförmig gewölbten Einkoppelseite 3 sind in dem dargestellten Ausführungsbeispiel mit ihren ausgahgsseitigen Enden acht Eingangslichtleiter 4, 5, 6, 7, 8, 9, 10, 11 einer ersten Eingangslichtleitereinheit 12 angeschlossen, wobei die ausgangsseitigen Enden in einem ersten Mündungsbereich in den Eingangsfreistrahlbereich 2 münden. Weiterhin sind bei dem dargestellten Ausführungsbeispiel an der Einkoppelseite 3 mit ihren ausgangsseitigen Enden acht Eingangslichtleiter 13, 14, 15, 16, 17, 18, 19, 20 einer zweiten Eingangslichtleitereinheit 21 angeschlossen, so daß deren ausgangsseitige Enden in einem zweiten Mündungsbereich in den Eingangsstrahlfreibereich 2 münden. Die Eingangslichtleitereinheiten 12, 21 sind dabei in einem Abstand voneinander angeordnet, wobei die optische Position einer Zentralwellenlänge zwischen den Mündungsbereichen liegt.

An einer konvex kreisförmig gewölbten Auskoppelseite 22 des Eingangsfreistrahlkopplers 1 ist eine Anzahl von Phasenschiebelichtleitern 23 eines Lichtleitergitters 24 angeschlossen. Die Phasenschiebelichtleiter 23 sind in der Länge unterschiedlich ausgebildet, wobei die Längendifferenz zwischen benachbarten Phasenschiebelichtleitern 23 konstant ist. Die konstante Längendifferenz ergibt sich in an sich bekannter Weise aus der Gitterordnung und der Zentralwellenlänge.

Die in Fig. 1 verkürzt dargestellten Phasenschiebelichtleiter 23 sind an einer Einkoppelseite 25 eines Ausgangsfreistrahlkopplers 26 angeschlossen und münden in dessen Ausgangsfreistrahlbereich 27. An einer konvex kreisförmig ausgebildeten Auskoppelseite 28 des Ausgangsfreistrahlkopplers 25 sind acht Ausgangslichtleiter 29, 30, 31, 32, 33, 34, 35, 36 einer Ausgangslichtleitereinheit 37 angeschlossen.

Vorzugsweise sind die Freistrahlkoppler 1, 26 sowie die Lichtleiter 4 bis 11, 13 bis 20, 23, 29 bis 36 der Lichtleitereinheiten 12, 21, 37 sowie des Lichtleitergitters 24 in planerer Wellenleitertechnik ausgeführt.

Die Eingangslichtleiter 4 bis 11 der ersten Eingangslichtleitereinheit 12 sowie die Eingangslichtleiter 13 bis 20 der zweiten Eingangslichtleitereinheit 21 sind mit ihren Mündungsbereichen in den Eingangsfreistrahlbereich 2 so angeordnet und dimensioniert, daß jeder Ausgangslichtleiter 29 bis 36 der Ausgangslichtleitereinheit 37 mit wenigstens zwei optischen Signalen mit Wellenlängen beaufschlagbar ist.

Es versteht sich, daß sowohl eine größere als auch kleinere Anzahl an Eingangslichtleitern 4 bis 11, 13 bis 20 der Eingangslichtleitereinheiten 12, 21 sowie der Ausgangslichtleiter 29 bis 36 vorgesehen sein können.

Bei dem in Fig. 1 dargestellten Ausführungsbeispiel ist in den Eingangslichtleitern 13 bis 20 der zweiten Eingangslichtleitereinheit 21 ein optisches Signal einer Wellenlänge, nämlich einer sogenannten Broadcast-Wellenlange einspeisbar, die beispielsweise über einen Einkoppellichtleiter einem in Fig. 1 nicht dargestellten Sternkoppler zuführbar und durch diesen auf die Eingangslichtleiter 13 bis 20 der zweiten Eingangslichtleitereinheit 21 aufteilbar ist. Jedem Eingangslichtleiter 4 bis 11 der ersten Eingangslichtleitereinheit 12 ist ein optisches Signal einspeisbar, wobei die den Eingangslichtleitern 4 bis 11 der ersten Eingangslichtleitereinheit 12 eingespeisten optischen Signale unterschiedliche spezifische Wellenlängen als Träger aufweisen. Die den Eingangslichtleitern 4 bis 11 der ersten Eingangslichtleitereinheit 12 einspeisbaren Wellenlängen sind vorzugsweise um eine von der den Eingangslichtleitern 13 bis 20 der zweiten Eingangslichtleitereinheit 21 einspeisbaren Broadcast-Wellenlänge verschiedene Mittenwellenlänge gruppiert und weisen untereinander einen gegenüber dem Wellenlängenabstand zwischen der Broadcast-Wellenlänge und der Mittenwellenlänge sehr viel kleineren Wellenlängenabstand auf. Durch die Anordnung und Dimensionierung der Mündungsbereiche der Eingangslichtleiter 4 bis 11, 13 bis 20 in bezug auf die Mündungsbereiche der Ausgangslichtleiter 29 bis 36 ist sichergestellt, daß jedem Ausgangslichtleiter 29 bis 36 eine spezifische Wellenlänge und die Broadcast-Wellenlänge einspeisbar ist.

Dabei ist die Position eines Eingangslichtleiters 4 bis 11 der ersten Eingangssignallichtleitereinheit 12 bei gegebener Position des ihm zugeordneten Ausgangslichtleiters 29 bis 36 gemäß folgender grundlegender Positioniergleichung gegeben:

$$\Theta_{IN}^{(i)} = \frac{m}{n_s d}\left\{\lambda^{(i)} - \lambda_c\left[1 \div \frac{1}{n_c}\frac{dn_c}{d\lambda}\Big|_{\lambda=\lambda_c}\left(\lambda^{(i)} - \lambda_c\right)\right]\right\} - \Theta_{OUT}^{(i)}$$

mit $\lambda^{(i)}$ für die in einem Eingangslichtleiter 4 bis 11 der ersten Einganglichtleitereinheit 12 geführten. Wellenlänge, $\lambda_c$ für die Zentralwellenlänge der Vorrichtung, die aus dem Mittel zwischen der Broadcast-Wellenlänge beziehungsweise der Mittenwellenlänge der spezifischen Wellenlängen berechnet ist, m für die Beugungsordnung des Lichtleitergitters 24, $n_c$ für den effektiven Brechungsindex der Phasenschiebelichtleiter 23, $n_s$ für den effektiven Brechungsindex der Freistrahlbereiche 2, 27, d für die Gitterkonstante (pitch) der Phasenschiebelichtleiter 23 am Übergang zu dem Ausgangsfreistrahlbereich 27 des Ausgangsfreistrahlkopplers 26, $\Theta^{(i)}_{IN}$ für den Einkoppelwinkel 38 des i-ten Eingangslichtleiters 4 bis 11 relativ zur Eingangssymmetrieachse 39 des Eingangsfreistrahlbereiches 2 und $\Theta^{(i)}_{OUT}$ für den Auskoppelwinkel 40 relativ zur Ausgangssymmetrieachse 41 des Ausgangsfreistrahlbereiches 27 In der Darstellung gemäß Fig. 1 sind die Symmetrieachsen 39, 41 und Koppelwinkel 38, 40 für den ersten Eingangslichtleiter 4 und dem ihm zugeordneten achten Ausgangslichtleiter 36 dargestellt.

Bei Beaufschlagen der Eingangslichtleiter 13 bis 20 der zweiten Eingangslichtleitereinheit 21 mit einer sogenannten Broadcast-Wellenlänge entsprechen die Zwischenwinkel zwischen benachbarten Ausgangslichtleitern 29 bis 36 den Zwischenwinkeln zwischen zugeordneten benachbarten Eingangslichtleitern 13 bis 20 der zweiten Eingangslichtleitereinheit 21.

Im Hinblick auf eine verhältnismäßig einfache Fertigung ist es zweckmäßig, die Ausgangslichtleiter 29 bis 36 äquidistant zentrisch um die Ausgangssymmetrieachse 41 anzuordnen, so daß lediglich die genaue angepaßte Anordnung der Eingangslichtleiter 4 bis 11, 13 bis 20 auszuführen ist.

In einer Abwandlung gegenüber dem in Fig. 1 dargestellten Ausführungsbeispiel sind die Eingangslichtleiter 13 bis 20 der zweiten Eingangslichtleitereinheit 21 in bezug auf die Ausgangslichtleiter 29 bis 36 so angeordnet daß in die Eingangslichtleiter 13 bis 20 der zweiten Eingangslichtleitereinheit 21 eingespeiste optische Signale mit weiteren unterschiedlichen spezifischen Wellenlängen als Träger jedem Ausgangslichtleiter 29 bis 36 zuführbar sind, die sich mit der in die Eingangslichtleiter 13 bis 20 der zweiten Eingangslichtleitereinheit 21 eingespeisten Broadcast-Wellenlänge überlagern. Bei dieser Abwandlung sind die Zwischenwinkel zwischen benachbarten Ausgangslichtleitern 29 bis 36 und Zwischenwinkel zwischen zugeordneten benachbarten Eingangslichtleitern 13 bis 20 der zweiten Eingangslichtleitereinheit 21 gemäß der oben angegebenen Positioniergleichung eingerichtet.

In einer weiteren Abwandlung gegenüber dem in Fig. 1 dargestellten Ausführungsbeispiel sind die Eingangslichtleiter 4 bis 11 der ersten Eingangslichtleitereinheit 12 in bezug auf die Ausgangslichtleiter 29 bis 36 so angeordnet, daß eine weitere den Eingangslichtleitern 4 bis 11 eingespeiste Broadcast-Wellenlänge jedem Ausgangslichtleiter 29 bis 36 zuführbar ist, die sich mit der in die Eingangslichtleiter 13 bis 20 der zweiten Eingangslichtleitereinheit 21 eingespeisten Broadcast-Wellenlänge überlagert.

Da häufig eine Broadcast-Wellenlänge von einem optischen Sender mit einer gewissen Toleranz erzeugt wird, ist es zweckmäßig, die Mündungsbereiche der die oder jede Broadcast-Wellenlänge führenden Eingangslichtleiter 4 bis 11, 13 bis 20 in der sogenannten Multimode-Interferenz-Technik auszuführen, gemäß der die Mündungsbereiche aufgeweitet werden, so daß aufgrund der Abbildungseigenschaften des durch den Eingangsfreistrahlkoppler 1, das Lichtleitergitter 24 und den Ausgangsfreistrahlkoppler 26 gebildeten Phased-Array-Spektrographen alle Ausgangslichtleiter 29 bis 36 mit einem im wesentlichen rechteckförmigen Intensitätsprofil gleichmäßig erregt werden. Aufgrund des breiteren Intensititätsprofiles ist die Wellenlängentoleranz deutlich erhöht.

Fig. 2 zeigt in einer gegenüber Fig. 1 vergrößerten Darstellung ein weiteres Ausführungsbeispiel einer Vorrichtung zum Überlagern optischer Signale mit unterschiedlichen Wellenlängen, bei dem eine entsprechend dem Ausführungsbeispiel gemäß Fig. 1 aufgebaute erste Eingangslichtleitereinheit 12 mit Eingangslichtleitern 4 bis 11 vorgesehen ist, die an der Einkoppelseite 3 in den Eingangsfreistrahlbereich 2 münden. Das Ausführungsbeispiel gemäß Fig. 2 verfügt weiterhin über eine erste Breitband-Eingangslichtleitereinheit 42, die als sogenannte Multimode-Interferenzlichtleiter 43 im Mündungsbereich in den Eingangsfreistrahlbereich 2 eine vorzugsweise hyperbolisch aufgewertete Ausgestaltung aufweist. Weiterhin verfügt das Ausführungsbeispiel gemäß Fig. 2 über eine zweite Breitband-Eingangslichtleitereinheit 44, die ebenfalls einen Multimode-Interferenzlichtleiter 45 aufweist. Dadurch ist in den Mündungsbereich der Ausgangslichtleiter 29 bis 36 eine im wesentlichen rechteckförmige Intensitätsverteilung des jeweiligen in diese Eingangslichtleitereinheit 42, 44 einspeisbaren Signales abbildbar. Die Eingangssymmetrieachse 39 des Eingangsfreistrahlkopplers 1 verläuft bei dem in Fig. 2 dargestellten Ausführungsbeispiel im wesentlichen mittig zwischen der ersten Eingangslichtleitereinheit 12 und der ersten Breitband-Eingangslichtleitereinheit 42 jeweils in bezug auf deren Mittelachsen.

In den Mulitimode-Interferenzlichtleiter 43 der ersten Breitband-Eingangslichtleitereinheit 42 ist eine erste sogenannte Broadcast-Wellenlänge und in den Multimode-Interferenzlichtleiter 45 der zweiten Breitband-Eingangslichtleitereinheit 44 eine zweite sogenannte Broadcast-Wellenlänge einspeisbar, die vorzugsweise spektral so weit auseinanderliegen, daß die Mündungsbereiche der Multimode-Interferenzlichtleiter 43, 45 voneinander beabstandet sind. Dadurch ist eine saubere räumliche Trennung und Abbildung der den Breitband-Eingangslichtleitereinheiten 42, 44 einspeisbaren optischen Signale auf die Ausgangslichtleiter 29 bis 36 erzielt. Die Multimode-Interferenzlichtleiter 43, 45 der Breitband-Eingangslichtleitereinheiten 42, 44 sind so angeordnet, daß in Fig. 2 nicht dargestellte Ausgangslichtleiter 29 bis 36 der Ausgangslichtleitereinheit 37 mit beiden Broadcast-Wellenlängen beaufschlagbar sind.

Zudem ist jeder Ausgangslichtleiter 29 bis 36 mit der in einem der Eingangslichtleiter 4 bis 11 der ersten Eingangslichtleitereinheit 12 geführten spezifischen Wellenlänge beaufschlagbar, so daß in jedem Ausgangslichtleiter 29 bis 36 eine spezifische Wellenlänge sowie die beiden Broadcast-Wellenlängen geführt werden. Durch den verhältnismäßig großen Mündungsbereich der Multimode-Interferenzlichtleiter 43, 45 sind die Ausgangslichtleiter 29 bis 36 im wesentlichen gleichmäßig mit den Broadcast-Wellenlängen innerhalb eines verhältnismäßig großen Wellenlangentoleranzbereiches beaufschlagbar

## Patentansprüche

1.   Vorrichtung zum Überlagern optischer Signale mit unterschiedlichen Wellenlängen mit einem Eingangsfreistrahlkoppler (1) und einem Ausgangsfreistrahlkoppler (26), deren Freistrahlbereiche (2, 27) über Phasenschiebelichtleiter (23) eines Lichtleitergitters (24) miteinander verbunden sind, mit einer ersten Eingangslichtleitereinheit, die an den Eingangsfreistrahlkoppler (1) angeschlossen ist, mit wenigstens einer weiteren Eingangslichtleitereinheit, wobei in jeder Eingangslichtleitereinheit wenigstens eine Wellenlänge führbar ist, und mit einer eine Anzahl von Ausgangslichtleitern (29 bis 36) aufweisenden Ausgangslichtleitereinheit (37), wobei die Ausgangslichtleiter (29 bis 36) an den Ausgangsfreistrahlkoppler (26) angeschlossen und so angeordnet sind, daß die Ausgangslichtleiter (29 bis 36) jeweils von wenigstens zwei optischen Signalen mit unterschiedlichen Wellenlängen beaufschlagbar sind, **dadurch gekennzeichnet, daß** die wenigstens eine weitere Eingangslichtleitereinheit (21) in den Freistrahlbereich (2) des Eingangsfreistrahlkopplers (1) mündet und daß Mündungsbereiche der Eingangslicht- leitereinheiten (12, 21, 42, 44) in den Freistrahlbereich (2) des Eingangsfreistrahlkopplers (1) relativ zu den Ausgangslichtleitern (29 bis 36) gemäß der Gleichung

$$\Theta_{IN}^{(i)} = \frac{m}{n_s d}\left\{\lambda^{(i)} - \lambda_c\left[1 + \frac{1}{n_c}\frac{dn_c}{d\lambda}\Big|_{\lambda=\lambda_c}\left(\lambda^{(i)} - \lambda_c\right)\right]\right\} - \Theta_{OUT}^{(i)}$$

wobei $\lambda^{(i)}$ die in einem Eingangslichtleiter (4 bis 11, 13 bis 20) der Eingangslichtleitereinheiten (12, 21) geführte Wellenlänge bedeutet; $\lambda_c$ die Zentralwellenlänge der Vorrichtung; m die Beugungsordnung des Lichtleitergitters (24); $n_c$ den effektiven Brechungsindex der Phasenschiebelichtleiter (23); $n_s$ den effektiven Brechungsindex der Freistrahlbereiche (2, 27); d die Gitterkonstante (pitch) der Phasenschiebelichtleiter (23) am Übergang zum Ausgangsfreistrahlbereich (27) des Ausgangsfreistrahlkopplers (26); $\Theta^{(i)}_{IN}$ den Einkoppelwinkel (38) des i-ten Eingangslichtleiters (4 bis 11, 13 bis 20) relativ zur Eingangssymmetrieachse (39) des Eingangsfreistrahlbereiches (2) und $\Theta^{(i)}_{OUT}$ den Auskoppelwinkel (40) relativ zur Ausgangssymmetrieachse (41) des Ausgangsfreistrahlbereiches (27) so angeordnet und dimensioniert sind, daß jeder Ausgangslichtleiter (29 bis 36) mit wenigstens zwei optischen Signalen unterschiedlicher Wellenlängen, die in mindestens zwei Eingangslichtleitereinheiten (12, 21) geführt sind, beaufschlagbar ist.

2. Vorrichtung nach Anspruch 1, **dadurch gekennzeichnet, daß** wenigstens drei Eingangslichtleitereinheiten (12, 21, 42, 44) an den Eingangsfreistrahlkoppler (1) angeschlossen sind.

3. Vorrichtung nach Anspruch 1 oder 2, **dadurch gekennzeichnet, daß** wenigstens eine erste Eingangslichtleitereinheit (12. 21) eine Anzahl von Eingangsichtleitern (4 bis 11, 13 bis 20) aufweist, wobei die Eingangslichtleiter (4 bis 11, 13 bis 20) und die Ausgangslichtleiter (29 bis 36) so angeordnet sind, daß bei Beaufschlagen der Eingangslichtleiter (4 bis 11) mit Signalen mit jeweils unterschiedlichen Wellenlängen jeder Ausgangslichtleiter (29 bis 36) mit einem Signal eines Eingangslichtleiters (4 bis 11) der ersten Eingangslichtleitereinheit (12) und mit einem Signal der wenigstens einen weiteren Eingangslichtleitereinheit (21, 42, 44) beaufschlagbar ist.

4. Vorrichtung nach Anspruch 3, **dadurch gekennzeichnet, daß** wenigstens eine weitere zweite Eingangslichtleitereinheit (21) eine Anzahl von Lichtleitern (13 bis 20) aufweist, wobei die Eingangslichtleiter (4 bis 11, 13 bis 20) der ersten Eingangslichtleitereinheit (12) und der zweiten Eingangslichtleitereinheit (21) sowie die Ausgangslichtleiter (29 bis 36) so angeordnet sind, daß bei Beaufschlagen der Eingangslichtleiter (4 bis 11) der ersten Eingangslichtleitereinheit (12) mit Signalen mit jeweils unterschiedlichen Wellenlängen und bei Beaufschlagen der Eingangslichtleiter (13 bis 20) der zweiten Eingangslichtleitereinheit (21) mit einem Signal einer weiteren Wellenlänge jeder Ausgangslichtleiter (29 bis 36) mit Signalen aus zugeordneten Eingangslichtleitern (4 bis 11, 13 bis 20) der Eingangslichtleitereinheiten (12, 21) beaufschlagbar ist.

5. Vorrichtung nach einem der Ansprüche 1 bis 4, **dadurch gekennzeichnet, daß** wenigstens eine Eingangslichtleitereinheit (42. 44) als sich vorzugsweise hyperbolisch in Richtung des Mündungsbereiches in den Freistrahlbereich (2) erweiternder Lichtleiter (43, 45) ausgebildet ist, so daß in den Mündungsbereich der Ausgangslichtleiter (29 bis 36) eine im wesentlichen rechteckförmige Intensitätsverteilung des jeweiligen in diese Eingangslichtleitereinheit (42. 44) einspeisbaren Signales abbildbar ist.

6. Vorrichtung nach einem der Ansprüche 1 bis 5, **dadurch gekennzeichnet, daß** die Ausgangslichtleiter (29 bis 36) äquidistant angeordnet sind

7. Vorrichtung nach einem der Ansprüche 1 bis 6, **dadurch gekennzeichnet, daß** die Mündungsbereiche der Eingangslichtleitereinheiten (12, 21, 42, 44) in einem Abstand voneinander angeordnet sind.

8. Vorrichtung nach einem der Ansprüche 1 bis 7, **dadurch gekennzeichnet, daß** Eingangslichtleiter (4 bis 11, 13 bis 20, 43, 45) und Lichtleiter (23) des Lichtleitergitters (24) als planare Wellenleiter ausgeführt sind.

9. Vorrichtung nach einem der Ansprüche 4 bis 8, **dadurch gekennzeichnet, daß** die Eingangslichtleiter (13 bis 20) einer ein Signal mit einer Wellenlänge führenden Eingangslichtleitereinheit (21) an die Ausgänge eines Sternkopplers angeschlossen sind.

**Claims**

1.  Device for superposing optical signals of different wavelengths, with an input free beam coupler (1) and an output free beam coupler (26), the free beam sections (2, 27) of which are connected to each other by way of phase-shift light guides (23) of a light guide grid (24), with a first input light guide unit connected to the input free beam coupler (1), with at least one further input light guide unit, it being possible to propagate at least one wavelength in each input light guide unit, and with an output light guide unit (37) provided with a plurality of output light guides (29 to 36), the output light guides (29 to 36) being connected to the output free beam coupler (26) and arranged in such a way that the output light guides (29 to 36) may, in each case, be fed with at least two optical signals of different wavelengths, **characterized in that** the at least one further input light guide unit (21) converges into the free beam section (2) of the input free beam coupler (1), and **in that** converging sections of the input light guide units (12, 21, 42, 44) converging into the free beam section (2) of the input free beam coupler (1) are arranged and dimensioned relative to the output light guides (29 to 36) in accordance with the equation

$$ \Theta_{IN}^{(i)} = \frac{m}{n_s d} \left\{ \lambda^{(i)} - \lambda_c \left[ 1 + \frac{1}{n_c} \frac{dn_c}{d\lambda} \Big|_{\lambda = \lambda_c} (\lambda^{(i)} - \lambda_c) \right] \right\} - \Theta_{OUT}^{(i)} $$

where $\lambda^{(i)}$ denotes the wavelength propagating in an input light guide (4 to 11, 13 to 20) of the input light guide units (12, 21); $\lambda_c$ denotes the central wavelength of the device; $m$ denotes the order of diffraction of the light guide grid (24); $n_c$ denotes the effective refractive index of the phase shift light guides (23); $n_s$ denotes the effective refractive index of the free beam sections (2, 27); $d$ denotes the grid constant (pitch) of the phase shift light guides (23) at the transition to the output free beam section (27) of the output free beam coupler (26); $\Theta_{IN}^{(i)}$ denotes the input coupling angle (38) of the $i^{th}$ input light guide (4 to 11, 13 to 20) relative to the input axis of symmetry (39) of the input free beam section (2); and $\Theta_{OUT}^{(i)}$ denotes the output coupling angle (40) relative to the output axis of symmetry (41) of the output free beam section (27), with the converging sections of the input light guide units (12, 21, 42, 44) being arranged and dimensioned in order that each output light guide (29 to 36) may be fed with at least two optical signals of different wavelengths that are propagating in at least two input light guide units (12, 21).

2.  Device according to claim 1, **characterized in that** at least three input light guide units (12, 21, 42, 44) are connected to the input free beam coupler (1).

3.  Device according to claim 1 or 2, **characterized in that** at least a first input light guide unit (12, 21) is provided with a plurality of input light guides (4 to 11, 13 to 20), with the input light guides (4 to 11, 13 to 20) and the output light guides (29 to 36) being arranged in such a way that when feeding the input light guides (4 to 11) with signals of respectively different wavelengths each output light guide (29 to 36) may be fed by a signal of an input light guide (4 to 11) of the first input light guide unit (12) and with a signal of the at least one further input light guide unit (21, 42, 44).

4.  Device according to claim 3, **characterized in that** at least one further second input light guide unit (21) is provided with a plurality of light guides (13 to 20), with the input light guides (4 to 11, 13 to 20) of the first input light guide unit (12) and of the second input light guide unit (21) as well as the output light guides (29 to 36) being arranged in such a way that upon feeding the input light guides (4 to 11) of the first input light guide unit (12) with signals of respectively different wavelengths and feeding the input light guides (13 to 20) of the second input light guide unit (21) with a signal of a further wavelength each output light guide (29 to 36) may be fed with signals from associated input light guides (4 to 11, 13 to 20) of the input light guide units (12, 21).

5.  Device according to one of claims 1 to 4, **characterized in that** at least one input light guide unit (42, 44) is structured as a light guide (43, 45) preferably hyperbolically flaring in the direction of the section that converges into the free beam section (2) so that a substantially rectangular intensity distribution of the respective signal which may be fed into this input light guide unit (42, 44) may be imaged into the converging section of the output light guides (29 to 36).

6.  Device according to one of claims 1 to 5, **characterized in that** the output light guides (29 to 36) are arranged equidistantly.

7.  Device according to one of claims 1 to 6, **characterized in that** the converging sections of the input light guide units (12, 21, 42, 44) are arranged at a distance from each other.

8.  Device according to one of claims 1 to 7, **characterized in that** input light guides (4 to 11, 13 to 20, 43, 45) and light guides (23) of the light guide grid (24) are structured as planar waveguides.

9.  Device according to one of claims 4 to 8, **characterized in that** the input light guides (13 to 20) of an input light guide unit (21) propagating a signal with a wavelength are connected to the outputs of a star coupler.

**Revendications**

1.  Dispositif pour superposer des signaux optiques ayant des longueurs d'ondes différentes, comprenant :

    -   un coupleur d'entrée à rayonnement libre fil et un coupleur de sortie à rayonnement libre (26) dont les zones de rayonnements libres (2, 27) sont reliées par des guides de lumière à déphasage (23) d'un réseau de guides de lumière (24),
    -   une première unité d'entrée de guides de lumière raccordée au coupleur d'entrée à rayonnement libre (1), et au moins une autre unité d'entrée de guides de lumière, chaque unité d'entrée de guides de lumière conduisant au moins une longueur d'onde, et
    -   une unité de sortie de guides de lumière (37) ayant un certain nombre de guides de lumière de sortie (29-36), les guides de lumière de sortie (29-36) raccordés au coupleur de sortie à rayonnement libre (26) étant disposés pour que les guides de lumière de sortie (29-36) reçoivent chaque fois au moins deux signaux optiques de longueurs d'onde différentes,

    **caractérisé en ce qu'**
    au moins une autre unité d'entrée de guides de lumière (21) débouche dans la zone de rayonnement libre (2) du coupleur d'entrée à rayonnement libre (1), et
    des zones d'embouchure des unités d'entrée de guides de lumière (12, 21, 42, 44) sont disposées dans la zone de rayonnement libre (2) du coupleur d'entrée à rayonnement libre (1) par rapport aux guides de lumière de sortie (29-36) selon l'équation

    $$\Theta_{\text{IN}}^{(i)} = \frac{m}{n_s d} \left\{ \lambda^{(1)} - \lambda_c \left[ 1 + \frac{1}{n_c} \frac{dn_c}{d\lambda} \bigg|_{\lambda = \lambda_c} \left( \lambda^{(i)} - \lambda_c \right) \right] \right\} - \Theta_{\text{OUT}}^{(i)}$$

    dans laquelle :

    -   $\lambda^{(i)}$ représente la longueur d'ondes conduite dans une guide de lumière d'entrée (4-11, 13-20) des unités d'entrée de guides de lumière (12, 21),
    -   $\lambda_c$ représente la longueur d'ondes centrale du dispositif,
    -   m représente l'ordre de diffraction du réseau de guides de lumière (24),
    -   $n_c$ représente l'indice de réfraction effectif du guide de lumière à déphasage (23),
    -   $n_s$ représente l'indice de réfraction effectif des plages de rayonnement libres (2, 27),
    -   d représente la constante du réseau (pas) du guide de lumière à déphasage (23) au passage dans la zone de sortie à rayonnement libre (27) du coupleur de sortie à rayonnement libre (26),
    -   $\Theta^{(i)}_{\text{IN}}$ représente l'angle de couplage d'entrée (38) du guide de lumière d'ordre (i) (4-11 ; 13-20) par rapport à l'axe de symétrie d'entrée (39) de la zone d'entrée à rayonnement libre (2) et,
    -   $\Theta^{(i)}_{\text{out}}$ représente l'angle de découplage (40) par rapport à l'axe de symétrie de sortie (41) de la zone de rayonnement libre de sortie (27),

    et disposées et dimensionnées de telle sorte que chaque guide de lumière de sortie (29-36) reçoive au moins deux signaux optiques de longueurs d'ondes différentes passant dans au moins deux unités d'entrée à guides de lumière (12, 21).

2.  Dispositif selon la revendication 1,

**caractérisé en ce qu'**
au moins trois unités d'entrée de guides de lumière (12, 21, 42, 44) sont raccordées au coupleur d'entrée à rayonnement libre (1).

**3.** Dispositif selon les revendications 1 ou 2,
**caractérisé en ce qu'**
au moins une première unité d'entrée de guides de lumière (12, 21) comporte un certain nombre de guides de lumière d'entrée (4-11, 13-20).
les guides de lumière d'entrée (4-11, 13-20) et les guides de lumière de sortie (29-36) sont disposés pour que lorsque les guides de lumière d'entrée (4-11) reçoivent des signaux à longueurs d'ondes respectives différentes, chaque guide de lumière de sortie (29-36) reçoit un signal d'un guide de lumière d'entrée (4-11) de la première unité d'entrée de guides de lumière (12) et un signal d'au moins une autre unité d'entrée de guides de lumière (21, 42, 44).

**4.** Dispositif selon la revendication 3,
**caractérisé en ce qu'**
au moins une autre seconde unité d'entrée de guides de lumière (21) comporte un certain nombre de guides de lumière (13-20), et
les guides de lumière d'entrée (4-11, 13-20) de la première unité d'entrée de guides de lumière (12) et de la seconde unité d'entrée de guides de lumière (21) ainsi que les guides de lumière de sortie (29-36) sont disposés pour que lorsque les guides de lumière entrée (4-11) de la première unité d'entrée (12) reçoivent des signaux à longueurs d'ondes respectives différentes et lorsque les guides de lumière d'entrée (13-20) de la seconde unité d'entrée (21) reçoivent un signal d'une autre longueur d'ondes, chaque guide de lumière de sortie (29-36) reçoit des signaux des guides de lumière d'entrée (4-11 ; 13-20) des unités d'entrée (12, 21).

**5.** Dispositif selon l'une quelconque des revendications 1 à 4,
**caractérisé en ce qu'**
au moins une unité de guides de lumière d'entrée (42, 44) est réalisée comme guide de lumière (43, 45) qui s'élargit dans la zone de rayonnement libre (2), de préférence de manière hyperbolique en direction de la zone d'embouchure, pour que dans cette zone d'embouchure, le guide de lumière de sortie (29-36) présente une répartition d'intensité essentiellement rectangulaire du signal injecté respectivement dans cette unité d'entrée (42, 44).

**6.** Dispositif selon l'une quelconque des revendications 1-5,
**caractérisé en ce que**
les guides de lumière de sortie (29-36) sont disposés des manière équidistante.

**7.** Dispositif selon l'une quelconque des revendications 1 à 6,
**caractérisé en ce que**
les zones d'embouchure des unités d'entrée de guides de lumière (12, 21, 42, 44) sont distantes les unes des autres.

**8.** Dispositif selon l'une quelconque des revendications 1 à 7,
**caractérisé en ce que**
les guides de lumière d'entrée (4-11, 13-20, 43, 45) et les guides de lumière (23) du réseau de guides de lumière (24) sont des guides d'ondes en technique planaire.

**9.** Dispositif selon l'une quelconque des revendications 4 à 8,
**caractérisé en ce que**
les guides de lumière d'entrée (13-20) d'une unité d'entrée de guides de lumière (21) transmettant un signal d'une longueur d'onde sont raccordés aux sorties d'un coupleur en étoile.

Fig. 1

EP 0 981 770 B1

Fig. 2

EP 0 981 770 B1